# EUROPEAN PATENT APPLICATION

(11) **EP 4 769 185 A1**
(43) Date of publication of application: **01.07.2026**
(21) Application number: 24856676.2
(22) Date of filing: 29.07.2024
(51) Int. Cl.: G06F 21/16, G06N 3/0475, G06N 3/094, G06N 3/088, G06T 1/00

(54) **ARTIFICIAL INTELLIGENCE-BASED FORENSIC WATERMARKING FRAMEWORK**

(30) Priority: 21.08.2023 KR 20230108749
(71) Applicant: Inka Entworks, Inc., Gangnam-gu Seoul 06109 (KR)
(72) Inventor: PARK, Sang Ho, Gwangju-si, Gyeonggi-do 12764 (KR); KIM, Dae Soo, Daegu 42251 (KR); PARK, Byeong Sun, Suwon-si, Gyeonggi-do 16701 (KR); KIM, Hyeon Jun, Seoul 02154 (KR)
(74) Representative: Jacobacci & Partners France
(86) International application number: PCT/KR2024/011001
(87) International publication number: WO 2025/042063

(57) **Abstract**

The present invention relates to an artificial intelligence-based forensic watermarking framework. A framework implementation system for forensic watermarking according to the present invention may include: a service platform comprising a forensic watermark application programming interface configured to embed a forensic watermark into multimedia content in order to provide a forensic watermarking service; and an artificial intelligence platform comprising: a training module configured to perform training on a forensic watermark model module using a plurality of multimedia contents; and a forensic watermark model module configured to, upon receiving frame-level multimedia content from the forensic watermark application programming interface of the service platform, transmit a region into which the forensic watermark is to be embedded for each frame-level multimedia content by using a training result of the training module.

## Description

### TECHNICAL FIELD

The present disclosure relates to an artificial intelligence-based forensic watermarking framework, and more particularly, to an artificial intelligence-based forensic watermarking framework that can be jointly utilized without infringing a revenue model of existing forensic watermarking service providers.

### BACKGROUND ART

A content provider that provides multimedia content embeds a forensic watermark capable of identifying a user into the multimedia content, in order to prevent leakage of the multimedia content. In a video streaming method that provides a VOD (Video On Demand) service or a live service, an A/B forensic watermarking technique is mostly applied in order to overcome a difficulty in embedding user information in real time.

In general, in the A/B forensic watermarking method, a forensic watermark A (0) or B (1) is embedded in advance into original video content through a preprocessing process, and thereafter, in a CDN (Content Delivery Network) stage, A-embedded video content and B-embedded video content generated in the preprocessing process are combined based on user information and provided to a user.

However, each service provider that provides a forensic watermarking service embeds a specific forensic watermark pattern into multimedia content by using different watermarking techniques. Such watermarking techniques and their performances are not disclosed. Accordingly, a content provider, such as an OTT (Over The Top) provider, has had a problem in that it cannot accurately know a degree of strength of a watermarking algorithm applied through a forensic watermarking service provider and robustness of the watermarking algorithm against which attacks.

### SUMMARY OF THE INVENTION

### TECHNICAL PROBLEMS

In order to solve the above-described problems, an object of the present disclosure is to provide an artificial intelligence-based forensic watermarking framework that allows users to use the framework with confidence by disclosing a watermarking technique that can be jointly utilized without infringing a revenue model of existing forensic watermarking service providers.

Another object of the present disclosure is to provide an artificial intelligence-based forensic watermarking framework that can flexibly cope with a new type of attack on a forensic watermark through joint efforts.

### TECHNICAL SOLUTION

In order to achieve the above-described objects, a framework implementation system for forensic watermarking according to one embodiment of the present disclosure comprises a service platform and an artificial intelligence platform. The service platform comprises a forensic watermark application programming interface configured to embed a forensic watermark into multimedia content in order to provide a forensic watermarking service.

The artificial intelligence platform comprises a training module and a forensic watermark model module. The training module is configured to perform training on the forensic watermark model module using a plurality of multimedia contents. The forensic watermark model module is configured to, upon receiving frame-level multimedia content from the forensic watermark application programming interface of the service platform, transmit a region into which the forensic watermark is to be embedded for each frame-level multimedia content by using a training result of the training module.

The service platform further comprises a detection application programming interface and a session application programming interface configured to extract the forensic watermark from watermark content in which the forensic watermark is embedded.

The forensic watermark model module comprises: a region model unit configured to select a region into which the forensic watermark is to be embedded in the multimedia content; an embedding model unit configured to perform evaluation while embedding the forensic watermark into the multimedia content; and a detection model unit configured to extract the forensic watermark from watermark content in which the forensic watermark is embedded.

The artificial intelligence platform further comprises a dataset module comprising data information related to a plurality of multimedia contents, and the training module is configured to perform training on the forensic watermark model module by using the data information of the dataset module.

The dataset module comprises: a multimedia content information file storing information related to multimedia content; a watermark content information file storing information related to watermark content; and
an attack information file storing attack information on the watermark content.

The region model unit is configured to select the region into which the forensic watermark is to be embedded by considering both: a region in which extraction of the forensic watermark can be well performed; and a region having a high recall when an attack occurs on the forensic watermark.

The region model unit is configured to determine the region into which the forensic watermark is to be embedded by ensemble-combining a segmentation model for selecting a region of a frame image and a recurrent neural network for score prediction.

The embedding model unit comprises a generative adversarial network including two generators and two discriminators.

The multimedia content is video content.

The two generators comprise: an A generator configured to generate an A watermark image in which a forensic watermark A is embedded into a frame image of original video content corresponding to a frame image of watermark content provided to one of the two discriminators; and a B generator configured to generate a B watermark image in which a forensic watermark B is embedded into the same frame image.

The two discriminators comprise: an A/B discriminator configured to discriminate the A watermark image and the B watermark image from a distribution of the frame image of the watermark content by using a binary cross-entropy loss; and an attack discriminator configured to evaluate robustness against an attack by using the A watermark image, the B watermark image, and a watermark pattern.

The detection model unit is configured to search, from distributed watermark content, a region in which the forensic watermark is embedded by using a region model, and to identify which forensic watermark is embedded in the distributed watermark content by using a classification model in the region.

According to another embodiment of the present disclosure, a method for implementing a framework for forensic watermarking in a computing device comprises steps of: performing training on a forensic watermark model using a plurality of multimedia contents; requesting selection of a region into which a forensic watermark is to be embedded in a frame image of multimedia content in order to provide a forensic watermarking service; selecting, for each frame image, the region into which the forensic watermark is to be embedded by using a training result of the performing of training, and transmitting the selected region; and embedding the forensic watermark into the frame image of the multimedia content to generate watermark content.

### EFFECT OF THE INVENTION

According to the above-described configuration, the present disclosure allows users to use the framework with confidence by disclosing a watermarking technique that can be jointly utilized without infringing a revenue model of existing forensic watermarking service providers.

The present disclosure further enables flexible addressing of new types of attacks on a forensic watermark through joint efforts.

The present disclosure also allows embedding of a forensic watermark having high quality and robustness against attacks by using evaluation results of training.

The present disclosure also increases invisibility and improves a watermark extraction rate by inserting a watermark only into regions having robustness against attacks and high recall.

### BRIEF DESCRIPTION OF THE DRAWINGS

FIG. 1 is a diagram illustrating an artificial intelligence-based forensic watermarking framework according to one embodiment of the present disclosure.
FIG. 2 is a diagram illustrating an example of a dataset according to one embodiment of the present disclosure.
FIG. 3 is a detailed block diagram illustrating a forensic watermark model module shown in FIG. 1.
FIG. 4 is a diagram illustrating a specific concept for execution of an embedding model unit shown in FIG. 3.
FIG. 5 is a diagram illustrating an example in which the artificial intelligence-based forensic watermarking framework shown in FIG. 1 is implemented in a computing device including a processor.
FIG. 6 is a flowchart illustrating a method for implementing an artificial intelligence-based forensic watermarking framework according to another embodiment of the present disclosure.

### DETAILED DESCRIPTION OF THE EMBODIMENTS

Advantages and features of the present disclosure, and methods for achieving the same, will become apparent with reference to embodiments described below in detail together with the accompanying drawings. However, the present disclosure is not limited to the embodiments described below and may be embodied in various different forms. The embodiments are provided only to complete the disclosure of the present disclosure and to fully inform a person skilled in the art of the scope of the present disclosure, and the present disclosure is defined only by the scope of the claims. Throughout the specification, the same reference numerals denote the same components.

Although terms such as "first" and "second" may be used to describe various components, such components are not limited by such terms. These terms are used only to distinguish one component from another component. Accordingly, a first component mentioned below may be a second component within the technical spirit of the present disclosure.

Terms used in the present specification are for the purpose of describing embodiments and are not intended to limit the present disclosure. As used herein, singular forms include plural forms unless the context clearly indicates otherwise. The terms "comprises" and/or "comprising," when used in the specification, specify the presence of stated features, components, or steps, but do not preclude the presence or addition of one or more other features, components, or steps.

Unless otherwise defined, all terms used herein may be interpreted as having meanings commonly understood by a person skilled in the art to which the present disclosure pertains. In addition, terms defined in generally used dictionaries should not be interpreted ideally or excessively unless explicitly defined otherwise.

Hereinafter, an artificial intelligence-based forensic watermarking framework according to the present disclosure will be described with reference to the accompanying drawings.

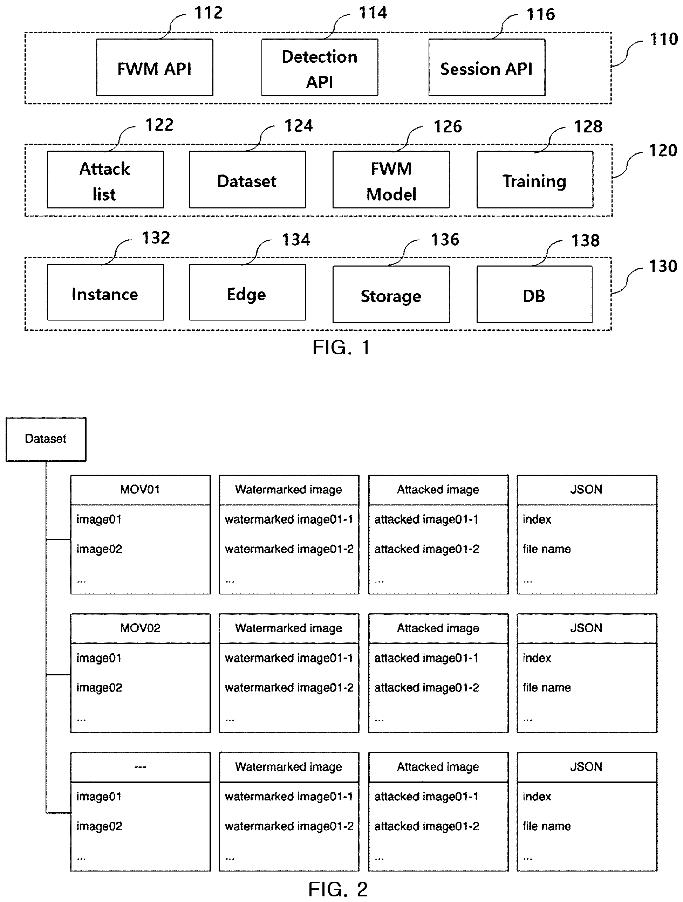

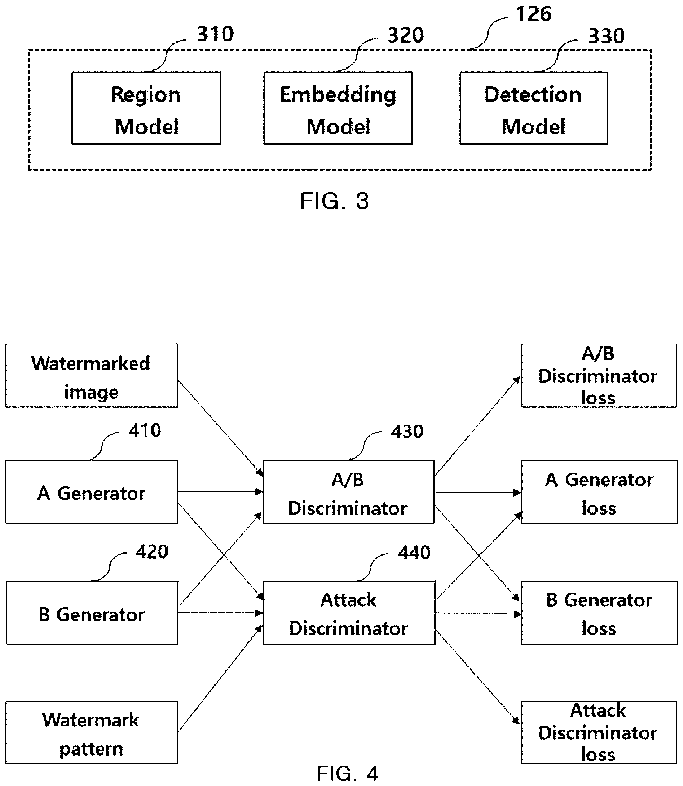

FIG. 1 is a diagram illustrating an artificial intelligence-based forensic watermarking framework according to one embodiment of the present disclosure, FIG. 2 is a diagram illustrating an example of a dataset according to one embodiment of the present disclosure, FIG. 3 is a detailed block diagram illustrating a forensic watermark model module shown in FIG. 1, and FIG. 4 is a diagram illustrating a specific concept for execution of an embedding model unit shown in FIG. 3.

As shown in FIG. 1, the artificial intelligence-based forensic watermarking framework may include a service platform 110 for embedding and extracting forensic watermark and for streaming services, an artificial intelligence platform 120 for building a dataset through collection of datasets and attack datasets and generating artificial intelligence models by performing training using the built dataset, and a cloud platform 130 for providing services to a plurality of service providers and users. Here, the framework refers to a software environment provided in a collaborative form so that design and implementation of parts corresponding to specific functions of software can be reused in order to facilitate development of software applications or solutions.

The service platform 110 is for a service provider providing a forensic watermarking service to provide a forensic watermarking service to a content provider. The service platform 110 may be provided in the form of Software-as-a-Service (SaaS). Such SaaS is a form of cloud computing that provides cloud applications and basic IT infrastructure and platforms to end users through an Internet browser. The service platform 110 may consume a minimum amount of resources when there is no request for a forensic watermarking service, and may provide a function of expanding resources through scale-up when requests for the forensic watermarking service increase.

The service platform 110 may include a forensic watermark application programming interface (FWM API) 112 for embedding a forensic watermark into multimedia content, a detection application programming interface (Detection API) 114 for detecting a forensic watermark embedded in multimedia content, and a session application programming interface (Session API) 116 for use when providing multimedia content to a user, for example, a user device.

The forensic watermark application programming interface 112 is an application programming interface usable by a service provider providing a forensic watermarking service. The forensic watermark application programming interface 112 may be provided in the form of a plug-in applicable in a preprocessing process, for example, an encoding stage. The forensic watermark application programming interface 112 transmits frame images of multimedia content to the artificial intelligence platform 120 in the encoding stage. The forensic watermark application programming interface 112 may receive, from the forensic watermark model module 126, a region into which a forensic watermark is to be embedded for a corresponding frame image, and may embed the forensic watermark in the plug-in.

The forensic watermark application programming interface 112 may embed a forensic watermark A (0) or B (1) in advance into original multimedia content, for example, video content, through preprocessing such as encoding, and thereafter, in a CDN stage, may combine A-embedded video content and B-embedded video content generated in the preprocessing process based on user information and provide the combined content to a user.

The detection application programming interface 114 is an application programming interface capable of extracting a forensic watermark from multimedia content in which a forensic watermark is embedded, that is, watermark content. The detection application programming interface 114 may extract a forensic watermark from frame images of damaged watermark content even when the forensic watermark is damaged due to a collusion attack or the like.

When receiving distributed watermark content from a content provider, the detection application programming interface 114 transmits the distributed watermark content to the artificial intelligence platform 120 and extracts a forensic watermark from the distributed multimedia content by using the detection model unit 330 of the forensic watermark model module 126, and receives an extracted forensic watermark. If the forensic watermark is not detected from the distributed watermark content, the detection application programming interface 114 determines the case as a new attack and updates such attack information in an attack list module 122 of the artificial intelligence platform 120.

The session application programming interface 116 may store a session key used when embedding a forensic watermark in a CDN. What is extracted from watermark content by the detection application programming interface 114 is the session key used at this time.

The artificial intelligence platform 120 may include an attack list module 122 in which new attack information on watermark content is updated, a dataset module 124 in which datasets for training are stored, a training model module 128 that performs training on a forensic watermark model and updates training results, and a forensic watermark model module 126 that performs a forensic watermark service through the forensic watermark application programming interface 112 and the detection application programming interface 114.

The attack list module 122 may store updated new attack information on watermark content. When a forensic watermark is not detected even though a forensic watermark has been embedded, the detection application programming interface 114 may determine the case as new attack information and update the attack list module 122.

An initial dataset may be configured in the dataset module 124. As shown in FIG. 2, the dataset of the dataset module 124 may include frame images (image01, image02, ...) of original video contents (MOV01, MOV02, ...), frame images (Watermarked image01-1, Watermarked image01-2, ...) of watermark content (Watermarked image), and attack images (Attacked image01-1, Attacked image01-2) corresponding to attack information (Attacked image) on watermark content. In this case, attack information on watermark content may be generated from the attack list module 122. The dataset may further include, as metadata for each level, a JSON in which information such as resolution information, information indicating what type of forensic watermark information is included, and information indicating what type of attack has been applied may be stored, and peak signal-to-noise ratio (PSNR) information.

The dataset of the dataset module 124 may be used to perform functions of the forensic watermark model module 126 described below.

As shown in FIG. 3, the forensic watermark model module 126 may include a region model unit 310 used when selecting a region into which a forensic watermark is to be embedded in a frame image of multimedia content, an embedding model unit 320 used when embedding a forensic watermark into a frame image while performing evaluation, and a detection model unit 330 used when extracting a forensic watermark from a frame image of watermark content.

The region model unit 310 determines a region, that is, a position, into which a forensic watermark is to be embedded in a frame image of multimedia content. The region model unit 310 may select a region in which extraction of a forensic watermark is well performed and a region having high recall even when an attack occurs. When regions for the above two purposes are selected by the region model unit 310, the dataset may be reconfigured using an existing initial dataset. The region model unit 310 may receive a frame image of multimedia content as an input, classify regions, and infer scores for respective regions.

The region model unit 310 may function by ensemble-combining a segmentation model for selecting regions of a frame image and a recurrent neural network for score prediction in order to determine a region into which a forensic watermark is to be embedded. Accordingly, invisibility may be increased and a watermark extraction rate may be improved by inserting a watermark only into regions having robustness against attacks and high recall.

The embedding model unit 320 generates a frame in which a forensic watermark is embedded into a frame image of multimedia content and discriminates a frame image in which the forensic watermark is embedded. To this end, the embedding model unit 320 may include a generative adversarial network (GAN). While a conventional GAN includes one generator and one discriminator, a GAN for training to embed a forensic watermark may include two generators and two discriminators as shown in FIG. 4.

The two generators may include an A generator 410 and a B generator 420. The A generator 410 may generate an A watermark image in which a forensic watermark A is embedded into a frame image of original video content corresponding to a frame image of watermark content provided to an A/B discriminator 430. The B generator 420 may generate a B watermark image in which a forensic watermark B is embedded into a frame image of original video content corresponding to a frame image of watermark content provided to an A/B discriminator 430.

The two discriminators may include the A/B discriminator 430 for determining quality of a forensic watermark and an attack discriminator 440 for evaluating robustness against attacks. The A/B discriminator 430 may receive, as inputs, the A watermark image provided from the A generator 410, the B watermark image provided from the B generator 420, and a frame image of watermark content. The A/B discriminator 430 may discriminate the A watermark image and the B watermark image from a distribution of the frame image of the watermark content by using a binary cross-entropy loss. The attack discriminator 440 may receive, as inputs, the A watermark image, the B watermark image, and a watermark pattern embedded in the frame image of the watermark content. The attack discriminator 440 may evaluate robustness against attacks by using the A watermark image, the B watermark image, and the watermark pattern.

Accordingly, the purpose of the A/B discriminator 430 is to distinguish real data from generated data, similarly to a discriminator of a conventional generative adversarial network. Meanwhile, the purpose of the attack discriminator 440 is to distinguish based on extracted data, that is, to distinguish between an actual watermark pattern and watermark patterns extracted from the A watermark image and the B watermark image.

The embedding model unit 320 may output evaluation results by using results output from the A/B discriminator 430 and the attack discriminator 440. In this case, the evaluation results may include values of an A/B discriminator loss, an A generator loss, a B generator loss, and an attack discriminator loss. The embedding model unit 320 may obtain content in which a forensic watermark pattern having high quality and robustness against attacks is embedded by using such evaluation results.

The detection model unit 330 is configured to extract a forensic watermark from multimedia content in which the forensic watermark is embedded and distributed, that is, from distributed watermark content. Specifically, the detection model unit 330 may search, from distributed watermark content, for a region in which a forensic watermark is embedded by using a region model, and extract the forensic watermark from the region. In addition, the detection model unit 330 may identify, in the region, which forensic watermark is embedded in an input image by using a classification model.

The training model module 128 may perform training by using the region model unit 310 and the dataset module 124. When the training model module 128 requests the region model unit 310 to perform training, the region model unit 310 may perform ensemble training by combining segmentation processing for selecting image regions and recurrent neural network processing for score prediction. In this case, JSON data of the dataset module 124 may store scores according to detection ratios and attack recall ratios.

The training model module 128 may perform training by using the embedding model unit 320 and the dataset module 124. In this case, training may be performed by using original multimedia content of the dataset module 124, such as original frame images, watermark content, attacked multimedia content, measured values such as peak signal-to-noise ratio (PSNR), and detection rates. For example, the training model module 128 may utilize frame images of original multimedia content and frame images of watermark content from the dataset module 124. The training model module 128 may further add attack information to the dataset module 124 in order to provide robustness against various attacks. The training model module 128 may add, to the dataset module 124, frame images of watermark content each time the embedding model unit 320 continuously generates the frame images of the watermark content, and may continuously extract forensic watermarks so as to improve an extraction rate.

The training model module 128 may perform training by using the detection model unit 330 and the dataset module 124. When the training model module 128 requests the detection model unit 330 to perform training, the detection model unit 330 may utilize the dataset module 124 and identify, by using a classification model, which forensic watermark is embedded in an input image, and may transmit the identified result to the training model module 128.

The cloud platform 130 may include an instance module 132 for intelligent cloud services, an edge module 134 for distributing computing power to clients, a storage module 136 for storing datasets of the dataset module 124, and a database 138 for storing session information and watermarking information.

As illustrated in FIG. 1, an artificial intelligence-based forensic watermarking framework comprises a service platform 110, an artificial intelligence platform 120, and a cloud platform 130. In this case, the service platform 110, the artificial intelligence platform 120, and the cloud platform 130 may be executed on a single server or may be executed on a plurality of servers.

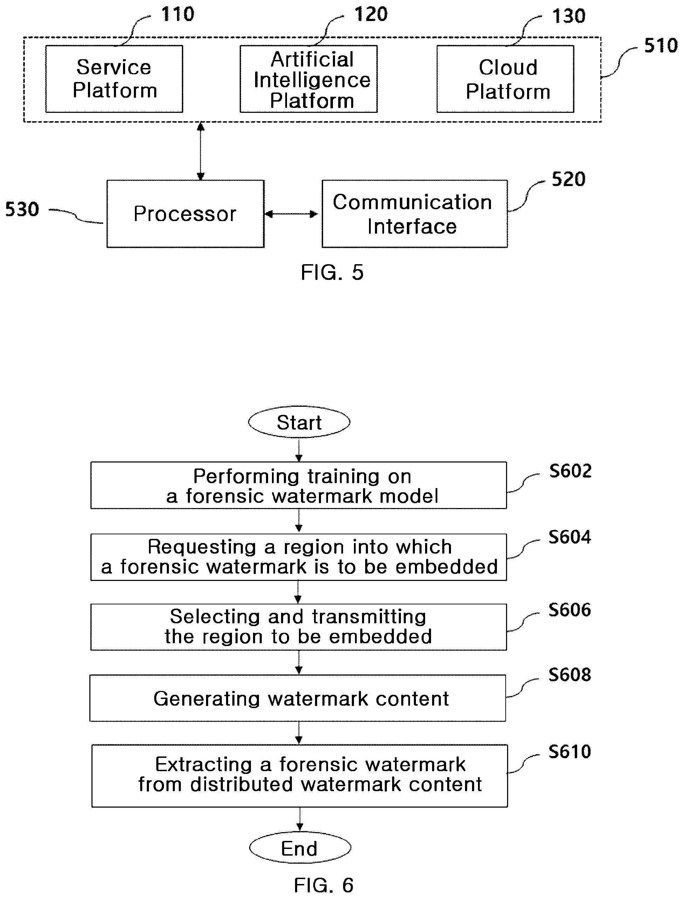

FIG. 5 illustrates an example in which the artificial intelligence-based forensic watermarking framework shown in FIG. 1 is implemented in a computing device including a processor.

As shown in FIG. 5, the computing device may include the service platform 110, the artificial intelligence platform 120, the cloud platform 130, a communication interface 520, and a processor 530.

Operations of the service platform 110, the artificial intelligence platform 120, and the cloud platform 130 are identical to those described with reference to FIG. 1, and thus detailed descriptions thereof are omitted.

The service platform 110, the artificial intelligence platform 120, and the cloud platform 130 may be stored in a storage medium 510 and may perform corresponding operations by execution of a processor 530. In addition, the communication interface 520 communicates with a content provider server (not shown) or a client device (not shown), and, under control of the processor 530, may receive multimedia content from the content provider server and transmit watermark content to the client device.

FIG. 6 is a flowchart illustrating a method for implementing an artificial intelligence-based forensic watermarking framework according to another embodiment of the present disclosure.

The training model module 128 performs training on the forensic watermark model module 126 by using a plurality of multimedia contents (S602). The performing of training in the computing device may be carried out by performing training on the forensic watermark model module 126 by using a dataset of the dataset module 124. The performing of training in the computing device may further include training to select, in the multimedia content, a region into which a forensic watermark is to be embedded by considering both a region in which extraction of the forensic watermark can be well performed and a region having a high recall when an attack occurs on the forensic watermark. The performing of training in the computing device may further include evaluating quality of the forensic watermark and robustness against attacks by using two discriminators.

The forensic watermark application programming interface 112 requests the region model unit 310 to select a region into which a forensic watermark is to be embedded in a frame image of multimedia content (S604). The region model unit 310 selects, for each frame image of multimedia content, a region into which a forensic watermark is to be embedded by using a training result of the training model module 128 and transmits the selected region (S606). The forensic watermark application programming interface 112 embeds the forensic watermark into the frame image of multimedia content to generate watermark content (S608).

When the detection model unit 330 receives distributed watermark content, the detection model unit 330 searches, from the distributed watermark content, for a region in which the forensic watermark is embedded by using a region model, and identifies, in the region, which forensic watermark is embedded in the distributed watermark content by using a classification model, thereby extracting the forensic watermark (S608). When a forensic watermark is not detected even though a forensic watermark has been embedded, the detection application programming interface 114 may determine the case as new attack information and update the attack list module 122.

The above-described embodiments are illustrative and not restrictive. Various modifications and variations may be made by a person skilled in the art within the scope of the technical spirit of the present disclosure.

## Claims

1. A framework implementation system for forensic watermarking, comprising:
a service platform comprising a forensic watermark application programming interface configured to embed a forensic watermark into multimedia content in order to provide a forensic watermarking service; and
an artificial intelligence platform comprising:
a training module configured to perform training on a forensic watermark model module using a plurality of multimedia contents; and
a forensic watermark model module configured to, upon receiving frame-level multimedia content from the forensic watermark application programming interface of the service platform, transmit a region into which the forensic watermark is to be embedded for each frame-level multimedia content by using a training result of the training module.

2. The framework implementation system according to claim 1,
wherein the service platform further comprises a detection application programming interface and a session application programming interface configured to extract the forensic watermark from watermark content in which the forensic watermark is embedded.

3. The framework implementation system according to claim 1,
wherein the forensic watermark model module comprises:
a region model unit configured to select a region into which the forensic watermark is to be embedded in the multimedia content;
an embedding model unit configured to perform evaluation while embedding the forensic watermark into the multimedia content; and
a detection model unit configured to extract the forensic watermark from watermark content in which the forensic watermark is embedded.

4. The framework implementation system according to claim 1,
wherein the artificial intelligence platform further comprises a dataset module comprising data information related to a plurality of multimedia contents, and
wherein the training module is configured to perform training on the forensic watermark model module by using the data information of the dataset module.

5. The framework implementation system according to claim 4,
wherein the dataset module comprises:
a multimedia content information file storing information related to multimedia content;
a watermark content information file storing information related to watermark content; and
an attack information file storing attack information on the watermark content.

6. The framework implementation system according to any one of claims 1 to 5,
wherein the region model unit is configured to select the region into which the forensic watermark is to be embedded by considering both: a region in which extraction of the forensic watermark can be well performed; and a region having a high recall when an attack occurs on the forensic watermark.

7. The framework implementation system according to claim 6,
wherein the region model unit is configured to determine the region into which the forensic watermark is to be embedded in a frame image of the multimedia content by ensemble-combining a segmentation model for selecting a region of the frame image and a recurrent neural network for score prediction.

8. The framework implementation system according to claim 6,
wherein the embedding model unit comprises a generative adversarial network including two generators and two discriminators.

9. The framework implementation system according to claim 8,
wherein the multimedia content is video content,
wherein the two generators comprise:
an A generator configured to generate an A watermark image in which a forensic watermark A is embedded into a frame image of original video content corresponding to a frame image of watermark content provided to one of the two discriminators; and
a B generator configured to generate a B watermark image in which a forensic watermark B is embedded into the same frame image, and
wherein the two discriminators comprise:
an A/B discriminator configured to discriminate distributions of each of the A watermark image and the B watermark image with respect to the frame image of the watermark content by using a binary cross-entropy loss; and
an attack discriminator configured to evaluate robustness against an attack by using the A watermark image, the B watermark image, and a watermark pattern.

10. The framework implementation system according to claim 3,
wherein the detection model unit is configured to:
search, from distributed watermark content, a region in which the forensic watermark is embedded by using a region model; and
identify which forensic watermark is embedded in the distributed watermark content by using a classification model in the region.

11. A method for implementing a framework for forensic watermarking in a computing device, comprising steps of:
performing training on a forensic watermark model using a plurality of multimedia contents;
requesting selection of a region into which a forensic watermark is to be embedded in a frame image of multimedia content in order to provide a forensic watermarking service;
selecting, for each frame image, the region into which the forensic watermark is to be embedded by using a training result of the performing of training, and transmitting the selected region; and
embedding the forensic watermark into the frame image of the multimedia content to generate watermark content.

12. The method according to claim 11, wherein the computing device comprises a dataset including:
a multimedia content file storing information related to the multimedia content;
a watermark content file storing information related to the watermark content; and
an attack information file storing attack information on the watermark content, and wherein the step of performing of training is performed by using the dataset.

13. The method according to claim 11 or 12,
wherein the step of performing of training comprises training to select the region into which the forensic watermark is to be embedded by considering both: a region in which extraction of the forensic watermark can be well performed and a region having a high recall when an attack occurs on the forensic watermark.

14. The method according to claim 13,
wherein the forensic watermark model comprises a generative adversarial network including two generators and two discriminators, and wherein the performing of training comprises evaluating quality of the forensic watermark and robustness against attacks by using the two discriminators.

15. The method according to claim 13,
further comprising a step of extracting the forensic watermark by: searching, from distributed watermark content, a region in which the forensic watermark is embedded by using a region model, identifying which forensic watermark is embedded in the distributed watermark content by using a classification model in the region, and extracting the forensic watermark.
